# EUROPEAN PATENT APPLICATION

(11) **EP 1 813 844 A1**
(43) Date of publication of application: **01.08.2007**
(21) Application number: 06101067.4
(22) Date of filing: 31.01.2006
(51) Int. Cl.: F16K 15/04, F16K 17/04, F02M 59/46, F04B 1/04, F04B 53/10

(54) **High-pressure piston pump for delivering fuel to a common rail of an internal combustion engine**

(71) Applicant: Centro Studi Componenti per Veicoli S.P.A., 70026 Modugno (IT)
(72) Inventor: Loiudice, Nicola, 70022 Altamura (IT); Cavallo, Angela, 74023 Grottaglie (IT)
(74) Representative: Jorio, Paolo

(57) **Abstract**

A high-pressure piston pump (1) for delivering fuel to an internal combustion engine is provided with a pump body (2); a fuel delivery conduit (3); and a delivery valve (4), which extends along a first axis (A), is located along the delivery conduit (3) and has a valve seat (7); a shutter (13); a fastening member (14) fitted in fluid-tight manner to the pump body (2); and a helical spring (15), which is wound about a second axis (A1) to form a number of turns (28; 29), and has a first end turn (29) resting against a surface of the fastening member (14) and a second end turn (29) acting on the shutter (13); each one of the first and second end turns (29) has an end contact portion (30) running substantially perpendicular to the second axis (A1).

## Description

The present invention relates to a high-pressure piston pump for delivering fuel to a common rail of an internal combustion engine, e.g. diesel engine.

The type of high-pressure piston pumps in use on modern diesel engines operates at high pressures of up to 1,600 bars, and comprises a delivery valve that must ensure constant delivery pressure with no fall in pressure or pressure peaks over and above the desired pressure.

Usually a high-pressure pump for delivering fuel to a common rail of an internal combustion engine comprises a pump body; a fuel delivery conduit; and a delivery valve, which extends along a first axis, is located along the delivery conduit and comprises a valve seat; a shutter; a fastening member fitted in fluid-tight manner to the pump body; and a helical spring, which is wound in a number of turns about a second axis, and has a first end turn resting against a surface of the fastening member and a second end turn acting on said shutter.

In use, the helical spring is compressed each time the fuel pressure in a portion of the delivery conduit upstream of the delivery valve raises up to a value so high as to exert a force on the shutter higher than an opposite force exerted on the shutter by the fuel pressure in a portion of the delivery conduit downstream of the delivery valve and by the helical spring.

The above-identified type of high-pressure piston pump has proved to be efficient and reliable. However it has been remarked that the area of contact between the fastening member and the helical spring and the area of contact between the shutter and helical spring are heavily worn. The worn areas are particular evident on the fastening member which is made of rather mild or soft steel to enable to close in fluid-tight manner the pump body, whereas the helical spring is made of thermally treated hard steel. As a consequence the first end turn of the helical spring wear the fastening member. On the opposite side the shutter, which is made of steel even harder than the steel used for fabricating the helical spring, wears the second end turn of the helical spring.

The applicant carried out studies and intensive searches for determining the causes of the wear of the above-mentioned areas and he identified that the helical spring is subject to lateral bending with respect to the second axis when compressed and that such a lateral bending determines a rotation of the helical spring about the second axis (the axis of the helical spring).

Therefore, on the one side, the lateral bending determines a short operating life for the helical spring and, on the other side, the concurrent rotation determine the wear.

The above mentioned drawbacks are more evident in high-pressure piston pump delivering a high fuel flow rate and for high operating pressures. Since anti-pollution international regulations impose of equipping high-power diesel engine with the common rail technology, the lateral bending of the helical spring of the high-pressure piston pump can be amplified by the higher fuel flow rate demanded for the high-power diesel engine.

In addition to that, since the higher the fuel pressure, the best are the performances offered by the engine equipped with a common rail, technicians are looking forward to increase as much as possible the fuel pressure and to reach soon the operating pressure of 2,200 bars, which stresses at a high degree all the components of the high-pressure pump.

It is an object of the invention to provide a high-pressure piston pump for delivering fuel to a common rail of an internal combustion engine, of the above type, which is highly straightforward and cheap to produce, and mitigate the aforementioned drawbacks.

According to the present invention, there is provided a high-pressure piston pump for delivering fuel to a common rail of an internal combustion engine, wherein the pump comprises a pump body; a fuel delivery conduit; and a delivery valve, which extends along a first axis, is located along the delivery conduit and comprises a valve seat; a shutter; a fastening member fitted in fluid-tight manner to the pump body; and a helical spring, which is wound about a second axis to form a number of turns comprising a first end turn resting against a surface of said fastening member and a second end turn acting on said shutter; said high-pressure piston pump being characterized in that each of said first and second end turns comprises an end contact portion running perpendicular to said second axis.

In accordance with the present invention the end turns of the helical spring contact the surface of the fastening member and the shutter along these end contact portions that are perpendicular to the second axis so as to keep the force exerted on helical spring substantially coincident to the second axis when the helical spring is compressed.

A preferred, non-limiting embodiment of the invention will be described by way of example with reference to the accompanying drawings, in which:
FIG. 1 shows a section, with parts removed for clarity, of a high-pressure piston pump for delivering fuel to a common rail of an internal combustion engine;
FIG. 2 shows a top view of a helical spring of the delivery valve of the high-pressure piston pump of figure 1; and
FIG. 3 shows a lateral view of the spring of figure 2.

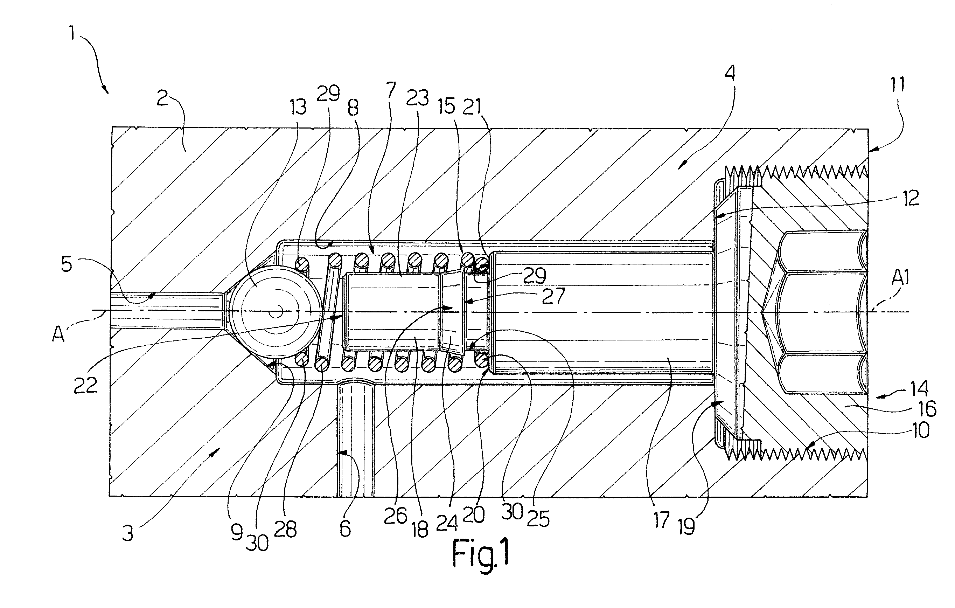

Number 1 in FIG. 1 indicates as a whole a diesel engine high-pressure piston pump for delivering fuel up to a pressure of 2,200 bars to a common rail of an internal combustion diesel engine. Pump 1 comprises a pump body 2, which is substantially a metallic block in which are made a cylinder (not shown); a fuel-feeding conduit (not shown); and a fuel delivery conduit 3. The high-pressure piston pump 1 comprises a delivery valve 4, which is arranged along the delivery conduit 3.

The delivery conduit 3 comprises a hole 5 upstream of the delivery valve 4 and a hole 6 downstream of the delivery valve 4, which comprises a seat 7 made in the pump body 2. Hole 5 and seat 7 are aligned along an axis A, whereas hole 6 extends in a transversal direction with respect to axis A from seat 7. Seat 7 comprises a hole 8 of grater diameter than the diameter of hole 5 and coaxial to hole 5; a truncated cone-shaped face 9 arranged between hole 5 and hole 8; and a hole 10, which is of greater diameter than the diameter of hole 8; is arranged on the side opposite to face 9; and is, at least partially, internally threaded. Hole 10 is adjacent to an outer face 11 of the pump body 2 and to hole 8 and forms a shoulder 12 in correspondence of hole 8.

Valve 4 further comprises a shutter 13, that in the embodiment shown in figure 1 is ball-shutter, a fastening member 14 and an helical spring 15 resting on the fastening member 14 and urging the shutter 13 against the truncated cone-shaped face 9 of seat 7.

Fastening member 14 is actually a screw made of rather soft or mild steel in order to be fitted in a fluid-tight manner to the pump body 2 and comprises a threaded head 16 to be screwed into the internally threaded hole 10; a shank 17 protruding from head 16 into seat 7 and a pin 18 further protruding from shank 17 into seat 7 towards the truncated cone-shaped face 9. Fastening member 14 has an annular shoulder 19 between head 16 and shank 17 and an annular shoulder 20 between the shank 17 and pin 18. Shoulder 19 is perpendicular to axis A and is pressed against shoulder 12 (eventually a sealing gasket can be arranged between shoulders 19 and 12), whereas shoulder 20 is perpendicular to axis A and defines a surface 21 on which the helical spring 15 rests. Pin 18 is provided with a distal end face 22, which stops the axial displacement of the shutter 13 and an outer cylindrical face 23. Pin 18 comprises and annular protrusion 24, which is arranged along the outer cylindrical face 23 and forms an annular recess 25 between the annular protrusion 24 and the surface 21 for holding the helical spring 15. In other words, helical spring 15 and fastening member 14 can be joined one another by inserting a portion of the helical spring 15 into the annular recess 25 by a snap fit action. Annular protrusion 24 has a truncated cone-shaped face 26 for helping the insertion of the helical spring 15 into the annular recess 25 and an annular face 27 parallel to surface 21 so as to retain the helical spring 15 into the annular recess 25.

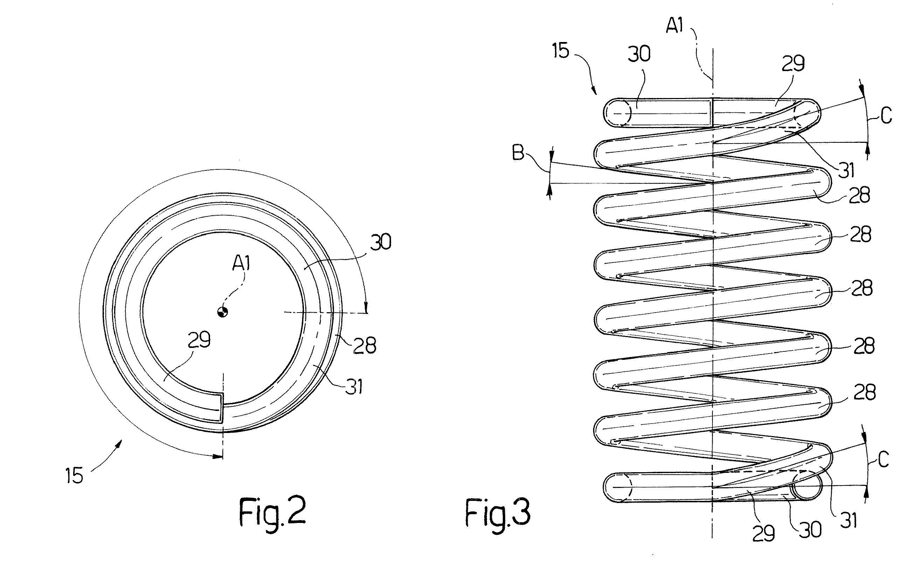

As better shown in figure 2 and 3, helical spring 15 extends along an axis A1 and comprises a number of turns 28, which are wound about axis A1 with a helix inclination of B (figure 3) and are of constant diameter; and two opposite end turns 29, which are of smallest diameter than the diameter of turns 28. Each end turn 29 winds about axis A1 along an angle of 360° and comprises an end contact portion 30, which lies on a plane perpendicular to axis A1. In other words, end contact portion 30 of each end turn 29 has an inclination equal to 0 and runs perpendicularly to axis A1. Preferably, each end contact portion 30 shall have an extension substantially equal to three quarter (270°) of the entire end turn 29 and is of constant diameter. The remaining portion 31 of each end turn 29 has the function of connecting turn 28 to the end contact portion 30. As a consequence each portion 31 is of variable diameter (figure 2); preferably has an extension substantially equal to one quarter (90°) of the entire end turn 29, and has an average helix inclination C larger than helix inclination B so as to compensate the lack of helix inclination of end contact portion 30. This compensation in helix inclination prevents that the end contact portion 30 rests on the adjacent turn 28 when helical spring 15 is compressed in use.

In use, high-pressure piston pump 1 feeds fuel along the delivery conduit 3. When the fuel pressure in hole 5 (portion of delivery conduit 3 upstream of the valve 4) exerts a force on the shutter 13 higher than the force exerted on shutter 13 by the helical spring 15 an the fuel pressure in hole 6 (portion of the delivery conduit 3 downstream of the delivery valve 4), the shutter 13 moves away from the truncated cone-shaped face 9 and compresses the helical spring 15.

The end contact portion 30 of the end turn 29 supports shutter 16. In the same way, helical spring 15 rests on surface 21 with end contact portion 30 of the opposite end turn 29. In this way, axis A1 of the helical spring 15 keeps substantially aligned with axis A and the force transmitted to helical spring 15, when compressed, is aligned with both axes A and A1. In this way bending and rotation of the helical spring are prevented.

One of the end turns 29 can be inserted by a snap fit action into the annular recess 25 so as to join the helical spring 15 to the fastening member 14 before inserting them into seat 7. Furthermore, helical spring 15 is completely symmetrical with respect to a hypothetical plane perpendicular to axis A1 and located right in the mid of the helical spring 15. In this way the assembly operations do not require to pay attention to the shape of the helical spring.

## Claims

1. A high-pressure piston pump (1) for delivering fuel to a common rail of an internal combustion engine comprises a pump body (2); a fuel delivery conduit (3); and a delivery valve (4), which extends along a first axis (A), is located along the delivery conduit (3) and comprises a valve seat (7); a shutter (13); a fastening member (14) fitted in fluid-tight manner to the pump body (2); and a helical spring (15), which is wound about a second axis (A1) substantially coincident with said first axis (A) to form a number of turns (28, 29) comprising a first end turn (29) resting against a surface (21) of said fastening member (14) and a second end turn (29) acting on said shutter (18); said high-pressure piston pump (1) being **characterized in that** each of said first and second end turns (29) comprises an end contact portion (30) running perpendicular to said second axis (A1).

2. A high-pressure piston pump as claimed in claim 1, **characterized in that** said end contact portion (30) extends for a length equal to about three quarter of the length of an end turn (29).

3. A high-pressure piston pump according to claim 1 or 2, **characterized in that** each of said end contact portion (30) is of constant diameter.

4. A high-pressure piston pump as claimed in any one of the foregoing claims, wherein said number of turns (28, 29) comprises turns (28) arranged between said first and second end turns (29); said pump being **characterized in that** each one of said first and second end turns (29) comprises a transition portion (31) which is adjacent to said end contact portion (30) and to one of said turns (28).

5. A high pressure piston pump as claimed in claim 4, **characterized in that** said turns (28) have a first helix inclination (B) each of said transition portion (31) has in average a second helix inclination (C) bigger than the first helix inclination (B).

6. A high-pressure piston pump as claimed in claim 4 and 5, **characterized in that** said each of said transition portion (31) has in average a second helix inclination (B) so dimensioned so as to avoid that the end contact portion (30) contacts the adjacent turn (28) when the helical spring (15) is compressed in use.

7. A high-pressure piston pump as claimed in anyone of the claims from 4 to 6, **characterized in that** each end contact portion (30) is wound about the second axis (A1) with a diameter smaller than the diameter of the remaining turns (28).

8. A high-pressure piston pump as claimed in claim 7, **characterized in that** the remaining turns (28) of said helical spring (15) are of constant diameter.

9. A high-pressure piston pump as claimed in claim 7 or 8, **characterized in that** said transition portion (31) is of variable diameter.

10. A high-pressure piston pump as claimed in anyone of the foregoing claims, wherein said fastening member (14) comprises a threaded head (16) which screws inside a threaded portion of a hole (10) in the pump body (2); said fastening member (14) having a first shoulder (19) contacting a shoulder (12) of said hole (10) in fluid-tight manner; and a second shoulder (20) on which rests said first end turn (29) of said helical spring (15).

11. A high-pressure piston pump as claimed in any one of the foregoing claims, **characterized by** comprising means for joining (25) said helical spring (15) to the fastening member (14).

12. A high-pressure piston pump as claimed in claim 11, **characterized in that** said fastening member (14) comprises a pin (18) extending inside said helical spring (15) from said surface (21); said means for joining comprising an annular recess (25), which extends about said pin (18) and is suitable to retain at least said first end turn (29) of said helical spring (15).

13. A high-pressure piston pump as claimed in claim 12, **characterised in that** said recess (25) is formed between said surface (21) and an annular protrusion (24) extending about said pin (18).

14. A high-pressure piston pump as claimed in claim 13, **characterized in that** said annular protrusion (24) is delimited by a truncated cone-shaped surface (26) for helping the insertion by snap fit action of said first end turn (29) of the helical spring (15) in said annular recess (25) and a annular face (27) perpendicular to said first axis (A) for retaining said first end turn (29) in said annular recess (25).

15. A high-pressure piston pump as claimed in anyone of the foregoing claims, **characterized in that** said first end and the second end turns (29) are equal to each other so as to be interchangeable.
